# FASCICULE DE BREVET EUROPEEN

(11) **EP 0 960 755 B1**
(45) Date de publication et mention de la délivrance du brevet: **09.01.2008**
(21) Numéro de dépôt: 99110281.5
(22) Date de dépôt: 27.05.1999
(51) Int. Cl.: B60H 1/00

(54) **Circuit de climatisation utilisant un fluide réfrigérant à l'état supercritique, notamment pour véhicule**
Klimakreislauf unter Verwendung einer Kühlflüssigkeit im superkritischen Zustand, insbesondere für Fahrzeuge
Air conditioning circuit using a refrigerant fluid in a supercritical state, in particular for a vehicle

(30) Priorité: 28.05.1998 FR 9806738
(43) Date de publication de la demande: 01.12.1999
(73) Titulaire: VALEO SYSTEMES THERMIQUES, 78320 Le Mesnil Saint-Denis (FR)
(72) Inventeur: Karl, Stefan, 75015 Paris (FR)
(74) Mandataire: Gamonal, Didier

(56) Documents cités:
- DE-A- 19 725 978
- US-A- 5 245 836
- US-A- 5 291 941

## Description

L'invention concerne un dispositif de climatisation, notamment de l'habitacle d'un véhicule, comprenant une boucle de climatisation pour la circulation d'un fluide réfrigérant, contenant un compresseur propre à recevoir le fluide à l'état gazeux et à le comprimer jusqu'à une pression supercritique, un premier échangeur de chaleur propre à refroidir le fluide comprimé par le compresseur, à pression sensiblement constante, en transférant de la chaleur à un premier milieu extérieur, un premier détendeur propre à abaisser la pression du fluide sortant du premier échangeur de chaleur pour l'amener au moins en partie à l'état liquide et un évaporateur propre à faire passer à l'état gazeux le fluide à l'état liquide provenant du premier détendeur, à pression sensiblement constante, en prélevant de la chaleur d'un second milieu extérieur pour refroidir l'espace à climatiser, le fluide ainsi vaporisé étant ensuite aspiré par le compresseur.

De tels dispositifs sont décrits par exemple dans WO-A-93/06423, US-A-5 245 836 et US-A-5 291 941. Le fluide réfrigérant utilisé dans ces dispositifs est typiquement le dioxyde de carbone CO2.

Quant on veut non pas refroidir, mais réchauffer de l'air à envoyer dans l'habitacle d'un véhicule, on utilise habituellement la chaleur produite par le moteur d'entraînement, par exemple en faisant passer l'air en contact avec un radiateur de chauffage traversé par un fluide de refroidissement du moteur.

Lorsque le moteur est froid, on ne peut en tirer de la chaleur pour le chauffage de l'habitacle, ce qui retarde le moment où celui-ci se trouve à la température souhaitée et nuit donc au confort des occupants. Dans certains cas le liquide de refroidissement n'atteint jamais pendant le trajet une température suffisamment élevée pour assurer le confort thermique dans l'habitacle.

Pour accélérer la mise en température de l'habitacle, on peut avoir recours à des dispositifs supplémentaires comportant notamment des brûleurs ou des radiateurs électriques, qui impliquent des investissements importants.

Le document DE 197 25 978 qui est considéré comme l'état de la technique le plus proche, divulgue un dispositif du genre défini en introduction, et comprenant en outre une première branche de dérivation disposée en parallèle avec le premier échangeur de chaleur, des moyens de commutation étant prévus pour faire circuler le fluide au choix dans le premier échangeur de chaleur en formant ladite boucle de climatisation, ou dans la première branche de dérivation en formant une boucle de chauffage dans laquelle l'évaporateur transfère de la chaleur du fluide réfrigérant audit second milieu extérieur pour chauffer ledit espace, ledit premier détendeur servant à détendre le fluide dans la boucle de climatisation et un second détendeur servant à détendre le fluide dans la boucle de chauffage. Le but de ce dispositif est de permettre un chauffage rapide de l'habitacle lorsque le moteur est froid, ou de compléter la quantité de chaleur insuffisante qu'il fournit, sans avoir recours à des moyens spécifiques coûteux.

Le but de l'invention est de permettre l'amélioration de l'efficacité d'un tel dispositif de climatisation.

Suivant l'invention, ledit circuit comprend un échangeur de chaleur interne propre à permettre l'échange de chaleur entre deux sections communes aux boucles de climatisation et de chauffage, dont la première est située entre l'extrémité aval de la première branche de dérivation et le premier détendeur et dont la seconde est située entre l'évaporateur et le compresseur, et le second détendeur est disposé entre l'extrémité aval de la première branche de dérivation et ladite première section.

Des caractéristiques optionnelles de l'invention, complémentaires ou alternatives, sont énoncées ci-après:

Le premier détendeur sert à détendre le fluide aussi bien dans la boucle de climatisation que dans la boucle de chauffage.

Un clapet anti-retour est disposé entre la sortie du premier échangeur de chaleur et l'extrémité aval de la première branche de dérivation.

Le dispositif comprend en outre une seconde branche de dérivation propre à être insérée dans la boucle de chauffage, en amont de l'évaporateur, par lesdits moyens de commutation et contenant un second échangeur de chaleur propre également à transférer de la chaleur du fluide réfrigérant audit second milieu extérieur pour chauffer ledit espace.

La seconde branche de dérivation est disposée en parallèle avec le premier détendeur et contient le second détendeur en amont du second échangeur de chaleur.

Les moyens de commutation comprennent les premier et second détendeurs, ceux-ci interdisant le passage du fluide pour l'établissement de la boucle de chauffage et de la boucle de climatisation respectivement.

Ledit second milieu extérieur est un flux d'air destiné à être envoyé dans ledit espace.

L'évaporateur et le second échangeur de chaleur sont disposés en série dans cet ordre dans le trajet dudit flux d'air.

Une source de chaleur extérieure au circuit de fluide réfrigérant est disposée dans le trajet dudit flux d'air en aval de l'évaporateur et le cas échéant du second échangeur de chaleur.
- Des moyens sont prévus pour faire varier la puissance thermique transmise de la boucle de chauffage audit second milieu extérieur.
- Lesdits moyens pour faire varier la puissance thermique comportent des moyens de réglage du premier détendeur et/ou du second détendeur.
- Lesdits moyens pour faire varier la puissance thermique comportent des moyens de réglage de la cylindrée ou de la vitesse du compresseur.
- Un réservoir 13 est disposé dans la boucle de climatisation en amont du compresseur.

Les caractéristiques et avantages de l'invention seront exposés plus en détail dans la description ci-après, en se référant aux dessins annexés, où des éléments identiques ou analogues sont désignés dans toutes les figures par les mêmes numéros de référence.

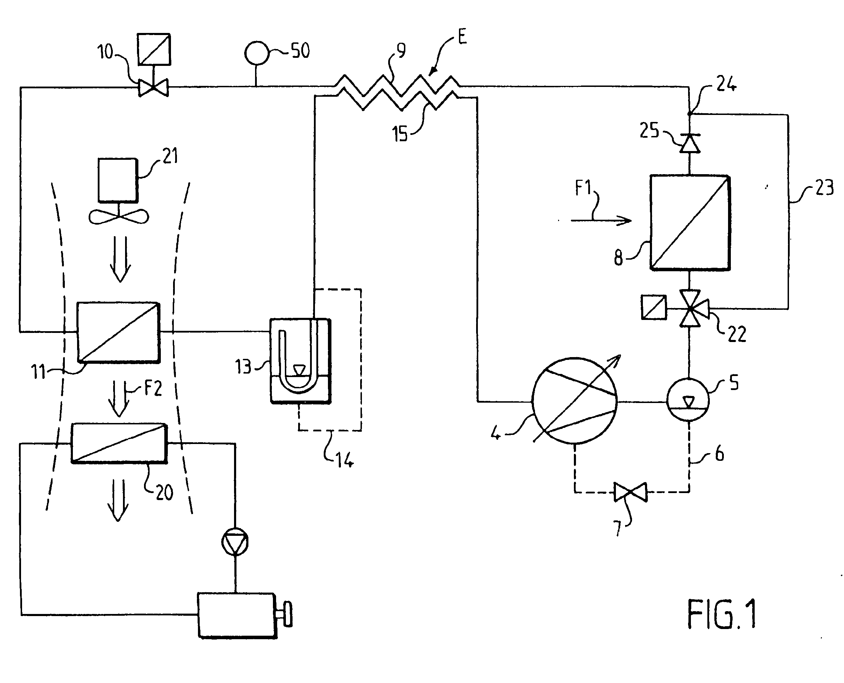

Les figures 1 à 4 sont des représentations schématiques partielles de quatre modes de réalisation d'un dispositif de climatisation de l'habitacle d'un véhicule automobile.

Dans la présente description, l'expression "dispositif de climatisation" désigne un dispositif permettant de régler la température d'un espace tel que l'habitacle d'un véhicule, soit en en extrayant de la chaleur, soit en y apportant de la chaleur, selon les besoins. En revanche, les expressions "boucle de climatisation" et "boucle de chauffage" sont utilisées pour désigner des boucles dans lesquelles le fluide réfrigérant circule pour refroidir l'espace et pour le chauffer, respectivement.

Chacun des dispositifs illustrés comprend un circuit de fluide réfrigérant comportant une boucle de climatisation, et au moins une branche de dérivation permettant de réaliser une boucle de chauffage. Ce circuit est prévu pour faire évoluer un fluide réfrigérant, notamment CO₂, de part et d'autre de la pression critique.

On décrira tout d'abord succinctement la boucle de climatisation, qui est pratiquement identique dans les quatre dispositifs et qui est connue en elle-même. Cette boucle comprend un compresseur 4, qui dans les exemples illustrés est à cylindrée variable, cette particularité n'étant pas limitative. Le compresseur 4 est suivi d'un séparateur d'huile 5, à partir duquel l'huile est ramenée au compresseur par une ligne de retour 6 munie d'un détendeur 7. Un échangeur de chaleur 8 permet de transférer à un flux d'air F1 une partie de la chaleur emmagasinée par le fluide réfrigérant lors de sa compression par le compresseur 4. En aval de l'échangeur 8 est disposée une voie 9 d'un échangeur de chaleur interne E à deux voies permettant un refroidissement supplémentaire du fluide. La voie 9 est suivie d'un détendeur 10, puis d'un évaporateur 11 qui est balayé par un flux d'air F2 destiné à être envoyé dans l'habitacle du véhicule. À la sortie de l'évaporateur, le fluide passe dans un réservoir 13 muni d'une ligne de retour de liquide 14. Le réservoir 13 empêche le fluide réfrigérant à l' état liquide de s'introduire dans le compresseur. Par ailleurs, le réservoir 13 constitue un réserve de fluide permettant de compenser les variations de charge dans le circuit de réfrigérant. Le fluide à l'état gazeux quittant le réservoir 13 passe dans la seconde voie 15 de l'échangeur de chaleur interne E, à contre-courant de la circulation dans la voie 9, avant de retourner au compresseur 4.

De manière connue également, un radiateur de chauffage 20, parcouru par le fluide de refroidissement du moteur d'entraînement du véhicule, est disposé en aval de l'évaporateur 11 dans le flux d'air F2, lequel est produit par un groupe moto-ventilateur 21.

Selon l'invention, une vanne à trois voies 22 est disposée dans la boucle de climatisation, entre le séparateur d'huile 5 et l'échangeur de chaleur 8, la vanne 22 pouvant être commandée de manière à envoyer le fluide comprimé dans une branche de dérivation 23 qui aboutit à un point de jonction 24 séparé de la sortie de l'échangeur 8 par un clapet anti-retour 25.

Le circuit de la figure 1 se distingue d'un circuit de climatisation à CO₂ classique en particulier par la présence de la vanne 22, de la branche 23 et du clapet 25. La vanne 22 peut être commandée pour faire circuler le fluide soit dans l'échangeur de chaleur 8 et dans le clapet 25, soit dans la branche 23 en évitant l'échangeur 8. Dans ce dernier cas, on obtient une boucle de chauffage dans laquelle l'évaporateur 11 sert de source de chaleur pour le flux d'air F2.

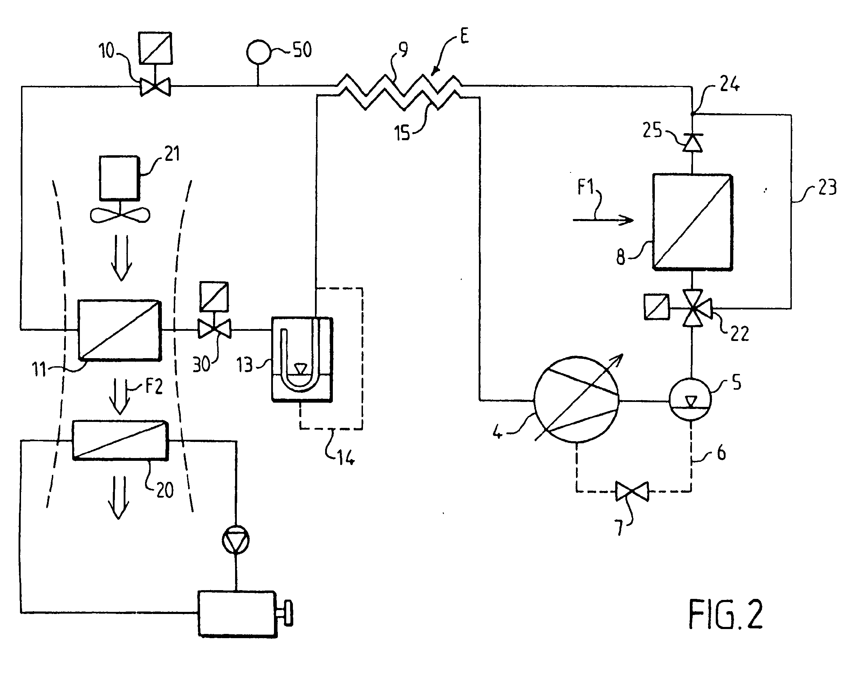

Le dispositif de la figure 2 diffère de celui de la figure 1 par l'adjonction d'un second détendeur 30 entre l'évaporateur 11 et le réservoir 13. Dans certains cas en effet, il peut être avantageux d'effectuer la détente, dans la boucle de chauffage, après le refroidissement du fluide dans l'évaporateur. Dans le circuit de la figure 1, la détente s'effectue en amont de l'évaporateur, dans la boucle de chauffage comme dans la boucle de climatisation.

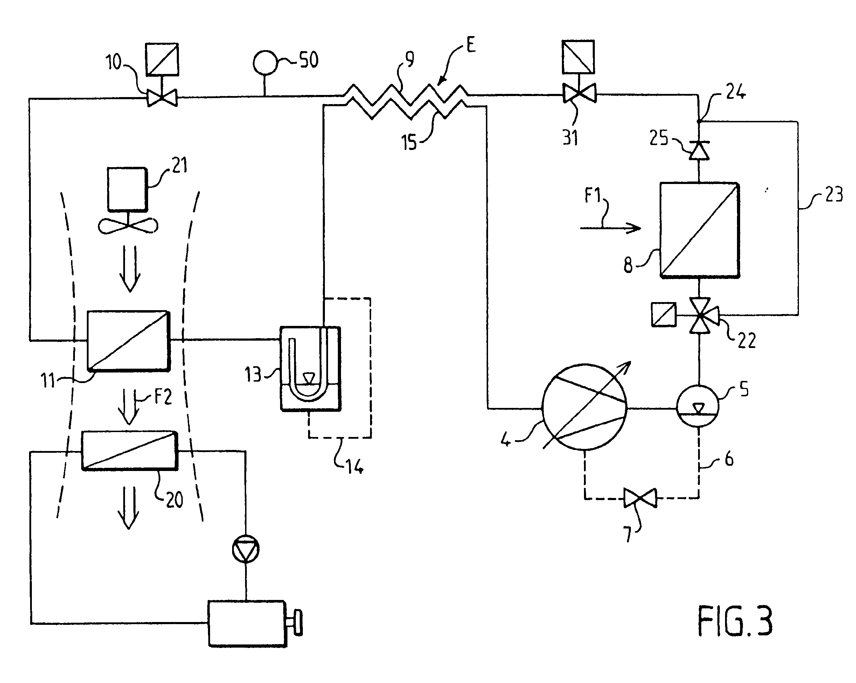

Une autre variante quant à la position du détendeur de la boucle de chauffage est indiquée sur la figure 3, où ce détendeur 31 est disposé entre le point de jonction 24 et la voie 9 de l'échangeur de chaleur E.

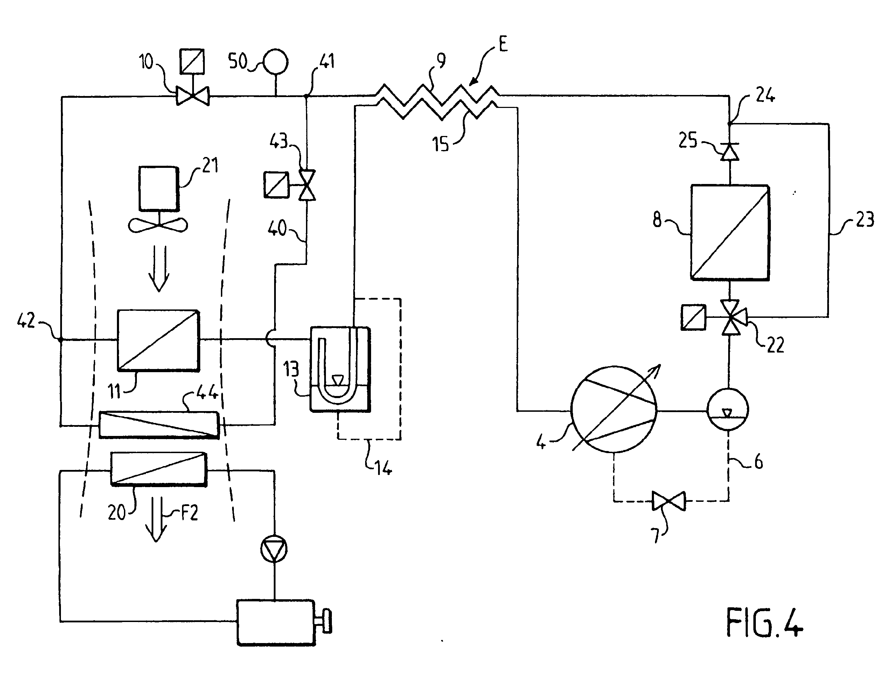

Enfin, la figure 4 montre l'adjonction d'une seconde branche de dérivation 40 partant d'un point de jonction 41 situé entre la voie 9 de l'échangeur de chaleur E et le détendeur de climatisation 10, et aboutissant à un point de jonction 42 situé entre ce même détendeur et l'évaporateur 11. La branche 40 contient un second détendeur 43 suivi d'un échangeur de chaleur 44 qui est disposé dans le flux d'air F2 entre l'évaporateur 11 et le radiateur 20. Les détendeurs 10 et 43 servent également de vannes d'arrêt et peuvent être commandés, conjointement à la vanne 22, pour faire circuler le fluide soit dans le détendeur 10 en même temps que dans l'échangeur de chaleur 8, soit dans la branche 40 en même temps que dans la branche 23. Dans ce dernier cas, le transfert de chaleur du fluide réfrigérant au flux d'air F2 s'effectue principalement par l'échangeur de chaleur 44, de telle sorte que le débit volumique du fluide dans l'évaporateur 11 est réduit, ce qui diminue les bruits d'écoulement, tout en maintenant l'évaporateur optimisé pour la fonction de climatisation. Bien entendu, la fonction d'arrêt exercée par les détendeurs 10 et 43 peut être obtenue par d'autres moyens, par exemple une vanne à trois voies disposée au point 41 ou au point 42, ou des vannes à deux voies insérées dans les branches concernées.

Dans tous les modes de réalisation, un capteur de pression 50 est disposé entre la voie 9 de l'échangeur E et le détendeur 10, et le cas échéant en aval du point 41. La puissance de la boucle de climatisation peut être commandée en utilisant ce capteur. Ce dernier peut également être utilisé dans les dispositifs des figures 1 à 3 pour commander la puissance de la boucle de chauffage. La commande de la boucle de climatisation peut être effectuée de manière connue en agissant sur la cylindrée ou sur la vitesse du compresseur 4, ou sur le détendeur 10. Selon l'invention, la commande de la boucle de chauffage peut être effectuée en agissant sur la cylindrée ou la vitesse du compresseur, ou sur le détendeur de chauffage 10, 30, 31 ou 43.

## Revendications

1. Dispositif de climatisation, comprenant une boucle de climatisation pour la circulation d'un fluide réfrigérant, contenant un compresseur (4) propre à recevoir le fluide à l'état gazeux et à le comprimer jusqu'à une pression supercritique, un premier échangeur de chaleur (8) propre à refroidir le fluide comprimé par le compresseur, à pression sensiblement constante, en transférant de la chaleur à un premier milieu extérieur (F1), un premier détendeur (10) propre à abaisser la pression du fluide sortant du premier échangeur de chaleur pour l'amener au moins en partie à l'état liquide et un évaporateur (11) propre à faire passer à l'état gazeux le fluide à l'état liquide provenant du premier détendeur, à pression sensiblement constante, en prélevant de la chaleur d'un second milieu extérieur (F2) pour refroidir l'espace à climatiser, le fluide ainsi vaporisé étant ensuite aspiré par le compresseur (4), comprenant en outre une première branche de dérivation (23) disposée en parallèle avec le premier échangeur de chaleur, des moyens de commutation (22) étant prévus pour faire circuler le fluide au choix dans le premier échangeur de chaleur en formant ladite boucle de climatisation, ou dans la première branche de dérivation en formant une boucle de chauffage dans laquelle l'évaporateur transfère de la chaleur du fluide réfrigérant audit second milieu extérieur (F2) pour chauffer ledit espace, premier détendeur (10) servant a détendre le fluide dans la boucle de climatisation et un second détendeur (30, 31, 43) servant à détendre le fluide dans la boucle de chauffage, **caractérisé en ce que** ledit circuit comprend un échangeur de chaleur interne (E) propre à permettre l'échange de chaleur entre deux sections communes aux boucles de climatisation et de chauffage, dont la première (9) est située entre l'extrémité aval (24) de la première branche de dérivation et le premier détendeur (10) et dont la seconde (15) est située entre l'évaporateur (11) et le compresseur (4), et **en ce que** le second détendeur (31) est disposé entre l'extrémité aval (24) de la première branche de dérivation et ladite première section.

2. Dispositif selon la revendication 1, **caractérisé en ce que** le premier détendeur (10) sert à détendre le fluide aussi bien dans la boucle de climatisation que dans la boucle de chauffage.

3. Dispositif selon l'une des revendications précédentes, **caractérisé en ce qu'**un clapet anti-retour (25) est disposé entre la sortie du premier échangeur de chaleur (8) et l'extrémité aval de la première branche de dérivation (3).

4. Dispositif selon l'une des revendications précédentes, **caractérisé en ce qu'**il comprend en outre une seconde branche de dérivation (40) propre à être insérée dans la boucle de chauffage, en amont de l'évaporateur, par lesdits moyens de commutation (10, 43) et contenant un second échangeur de chaleur (44) propre également à transférer de la chaleur du fluide réfrigérant audit second milieu extérieur (F2) pour chauffer ledit espace.

5. Dispositif selon la revendication 4, rattachée à la revendication 1, **caractérisé en ce que** la seconde branche de dérivation est disposée en parallèle avec le premier détendeur (10) et contient le second détendeur (43) en amont du second échangeur de chaleur.

6. Dispositif selon la revendication 5, **caractérisé en ce que** les moyens de commutation comprennent les premier et second détendeurs (10, 43), ceux-ci interdisant le passage du fluide pour l'établissement de la boucle de chauffage et de la boucle de climatisation respectivement.

7. Dispositif selon l'une des revendications précédentes, **caractérisé en ce que** ledit second milieu extérieur est un flux d'air (F2) destiné à être envoyé dans ledit espace.

8. Dispositif selon la revendication 7, rattachée à la revendication 4, **caractérisé en ce que** l'évaporateur (11) et le second échangeur de chaleur (44) sont disposés en série dans cet ordre dans le trajet dudit flux d'air (F2).

9. Dispositif selon l'une des revendications 7 et 8, **caractérisé en ce qu'**une source de chaleur (20) extérieure au circuit de fluide réfrigérant est disposée dans le trajet dudit flux d'air (F2) en aval de l'évaporateur et le cas échéant du second échangeur de chaleur.

10. Dispositif selon l'une des revendications précédentes, **caractérisé en ce que** des moyens sont prévus pour faire varier la puissance thermique transmise de la boucle de chauffage audit second milieu extérieur (F2).

11. Dispositif selon la revendication 10, **caractérisé en ce que** lesdits moyens pour faire varier la puissance thermique comportent des moyens de réglage du premier détendeur (10) et/ou du second détendeur (30, 31, 43).

12. Dispositif selon la revendication 10, **caractérisé en ce que** lesdits moyens pour faire varier la puissance thermique comportent des moyens de réglage de la cylindrée ou de la vitesse du compresseur (4).

13. Dispositif selon la revendication 1 **caractérisé en ce qu'**un réservoir 13 est disposé dans la boucle de climatisation en amont du compresseur (4).

## Claims

1. Air conditioning device, comprising an air conditioning loop for the circulation of a coolant, containing a compressor (4) capable of receiving the coolant in gaseous state and of compressing it until it reaches a super-critical pressure, a first heat exchanger (8) capable of cooling the coolant compressed by the compressor, at a substantially constant pressure, by transferring the heat from a first external medium (F1), a first expansion valve (10) capable of lowering the pressure of the coolant leaving the first heat exchanger to take it at least partially in the liquid state and an evaporator (11) capable of changing the coolant in the liquid state from the first expansion valve to the gaseous state, at a substantially constant pressure, by taking heat from a second external medium (F2) to cool down the space to be air conditioned, wherein the coolant thus vaporised is then sucked in by the compressor (4), further comprising a first connecting branch (23) positioned in parallel with the first heat exchanger, wherein switching means (22) are provided to circulate the coolant either in the first heat exchanger forming said air conditioning loop, or in the first connecting branch forming a heating loop in which the evaporator transfers heat from the coolant to said second external medium (F2) to heat said space, wherein said first expansion valve (10) is used to lower the pressure of the coolant in the air conditioning loop and a second expansion valve (30, 31, 43) is used to lower the pressure in the heating loop, **characterised in that** said circuit comprises an internal heat exchanger (E) capable of permitting an exchange of heat between two sections that are common to the air conditioning and the heating loops, of which a first section (9) is positioned between the downstream end (24) of the first connecting branch and the first expansion valve (10) and the second section (15) is positioned between the evaporator (11) and the compressor (4), and **in that** the second expansion valve (31) is positioned between the downstream end (24) of the first connecting branch and said first section.

2. Device according to claim 1, **characterised in that** the first expansion valve (10) is used to lower the pressure both in the air conditioning loop and in the heating loop.

3. Device according to any of the previous claims, **characterised in that** a non-return valve (25) is fitted between the outlet of the first heat exchanger (8) and the downstream end of the first connecting branch (3).

4. Device according to any of the previous claims, **characterised in that** it further comprises a second connecting branch (40) that is capable of being inserted into the heating loop, upstream of the evaporator, by said switching means (10, 43) and that it contains a second heat exchanger (44) is also capable of transferring the heat from the coolant to said second external medium (F2) to heat said space.

5. Device according to claim 4, attached to claim 1, **characterised in that** the second connecting branch is positioned in parallel to the first expansion valve (10) and contains the second expansion valve (43) upstream of the second heat exchanger.

6. Device according to claim 5, **characterised in that** the switching means comprise the first and second expansion valves (10, 43), wherein the latter prevent the passage of the coolant to establish the heating loop and the air conditioning loop respectively.

7. Device according to any of the previous claims, **characterised in that** said second external medium is an air flow (F2) designed to be sent into said space.

8. Device according to claim 7, attached to claim 4, **characterised in that** the evaporator (11) and the second heat exchanger (44) are positioned in series in this order in the path of said air flow (F2).

9. Device according to any of the claims 7 or 8, **characterised in that** a heat source (20) external to the coolant circuit is positioned in the path of said air flow (F2) downstream of the evaporator and if applicable the second heat exchanger.

10. Device according to any of the previous claims, **characterised in that** means are provided to vary the thermal power transmitted from the heating loop to said second external medium (F2).

11. Device according to claim 10, **characterised in that** said means of varying the thermal power comprise means of adjusting the first expansion valve (10) and/or the second expansion valve (30, 31, 43).

12. Device according to claim 10, **characterised in that** said means of varying the thermal power comprise means of adjusting the capacity or the speed of the compressor (4).

13. Device according to claim 1, **characterised in that** a tank (13) is positioned in the air conditioning loop upstream of the compressor (4).

## Patentansprüche

1. Klimatisierungsvorrichtung, umfassend eine Klimatisierungsschleife für den Umlauf,eines Kältemittels, die einen Verdichter (4), der dazu dient, das Mittel in gasförmigem Zustand aufzunehmen und es bis auf einen superkritischen Druck zu verdichten, einen ersten Wärmeaustauscher (8), der dazu dient, das vom Verdichter verdichtete Mittel bei einem im Wesentlichen konstanten Druck abzukühlen, indem Wärme an ein erstes Außenmedium (F1) übertragen wird, ein erstes Expansionsventil (10), das dazu dient, den Druck des aus dem ersten Wärmeaustauscher austretenden Mittels zu verringern, um es zumindest teilweise in den flüssigen Zustand überzuführen, und einen Verdampfer (11) aufweist, der dazu dient, das in flüssigem Zustand befindliche Mittel, das aus dem ersten Expansionsventil stammt, bei einem im Wesentlichen konstanten Druck in den gasförmigen Zustand überzuführen, indem einem zweiten Außenmedium (F2) Wärme entnommen wird, um den zu klimatisierenden Raum abzukühlen, wobei das dadurch verdampfte Mittel anschließend vom Verdichter (4) angesaugt wird, des Weiteren umfassend einen ersten Ableitungszweig (23), der parallel zum ersten Wärmeaustauscher angeordnet ist, Schaltmittel (22), die vorgesehen sind, um das Mittel wahlweise im ersten Wärmeaustauscher zirkulieren zu lassen, wodurch die besagte Klimatisierungsschleife gebildet wird, oder im ersten Ableitungszweig, wodurch eine Heizungsschleife gebildet wird, in der der Verdampfer Wärme des Kältemittels an das besagte zweite Außenmedium (F2) überträgt, um den besagten Raum zu heizen, wobei das besagte erste Expansionsventil (10) dazu dient, den Druck des Mittels in der Klimatisierungsschleife zu verringern, und wobei ein zweites Expansionsventil (30, 31, 43) dazu dient, den Druck des Mittels in der Heizungsschleife zu verringern, **dadurch gekennzeichnet, dass** der besagte Kreislauf einen internen Wärmeaustauscher (E) umfasst, der dazu dient, den Wärmeaustausch zwischen zwei Stellen zu ermöglichen, die der Klimatisierungs- und Heizungsschleife gemein sind, wovon sich die erste (9) zwischen dem nachgelagerten Ende (24) des ersten Ableitungszweiges und dem ersten Expansionsventil (10) befindet, und wovon sich die zweite (15) zwischen dem Verdampfer (11) und dem Verdichter (4) befindet, und **dadurch, dass** das zweite Expansionsventil (31) zwischen dem nachgelagerten Ende (24) des ersten Ableitungszweiges und der besagten ersten Stelle angeordnet ist.

2. Vorrichtung nach Anspruch 1, **dadurch gekennzeichnet, dass** das erste Expansionsventil (10) dazu dient, den Druck des Mittels sowohl in der Klimatisierungsschleife als auch in der Heizungsschleife zu verringern.

3. Vorrichtung nach einem der vorhergehenden Ansprüche, **dadurch gekennzeichnet, dass** zwischen dem Austritt des ersten Wärmeaustauschers (8) und dem nachgelagerten Ende des ersten Ableitungszweiges (3) ein Rückschlagventil (25) angeordnet ist.

4. Vorrichtung nach einem der vorhergehenden Ansprüche, **dadurch gekennzeichnet, dass** sie des Weiteren einen zweiten Ableitungszweig (40) umfasst, der dazu dient, mithilfe der Schaltmittel (10, 43) in die Heizungsschleife, dem Verdampfer vorgelagert, eingefügt zu werden, und der einen zweiten Wärmeaustauscher (44) umfasst, der ebenfalls dazu dient, Wärme des Kältemittels an das besagte zweite Außenmedium (F2) zu übertragen, um den besagten Raum zu heizen.

5. Vorrichtung nach Anspruch 4, verbunden mit Anspruch 1, **dadurch gekennzeichnet, dass** der zweite Ableitungszweig parallel zum ersten Expansionsventil (10) angeordnet ist und das zweite Expansionsventil (43) beinhaltet, das dem zweiten Wärmeaustauscher vorgelagert ist.

6. Vorrichtung nach Anspruch 5, **dadurch gekennzeichnet, dass** die Schaltmittel das erste und zweite Expansionsventil (10, 43) umfassen, wobei diese den Durchlauf des Mittels jeweils zur Herstellung der Heizungsschleife und der Klimatisierungsschleife verbieten.

7. Vorrichtung nach einem der vorhergehenden Ansprüche, **dadurch gekennzeichnet, dass** das besagte zweite Außenmedium ein Luftstrom (F2) ist, der dafür bestimmt ist, in den besagten Raum gesendet zu werden.

8. Vorrichtung nach Anspruch 7, verbunden mit Anspruch 4, **dadurch gekennzeichnet, dass** der Verdampfer (11) und der zweite Wärmeaustauscher (44) in dieser Reihenfolge auf der Strecke des besagten Luftstroms (F2) in Serienschaltung angeordnet sind.

9. Vorrichtung nach einem der Ansprüche 7 und 8, **dadurch gekennzeichnet, dass** eine Wärmequelle (20) außerhalb des Kältemittelkreislaufes auf der Strecke des besagten Luftstroms (F2) angeordnet und dem Verdampfer und gegebenenfalls dem zweiten Wärmeaustauscher nachgelagert ist.

10. Vorrichtung nach einem der vorhergehenden Ansprüche, **dadurch gekennzeichnet, dass** Mittel vorgesehen sind, um die Wärmeleistung, die von der Heizungsschleife an das zweite Außenmedium (F2) übertragen wird, schwanken zu lassen.

11. Vorrichtung nach Anspruch 10, **dadurch gekennzeichnet, dass** die besagten Mittel, die vorgesehen sind, um die Wärmeleistung schwanken zu lassen, Mittel zur Regulierung des ersten Expansionsventils (10) und/oder des zweiten Expansionsventils (30, 31, 43) umfassen.

12. Vorrichtung nach Anspruch 10, **dadurch gekennzeichnet, dass** die besagten Mittel, die vorgesehen sind, um die Wärmeleistung schwanken zu lassen, Mittel zur Regulierung des Hubvolumens oder der Geschwindigkeit des Verdichters (4) umfassen.

13. Vorrichtung nach Anspruch 1, **dadurch gekennzeichnet, dass** ein Behälter (13) in der Klimatisierungsschleife angeordnet und dem Verdichter (4) vorgelagert ist.
